# EUROPEAN PATENT SPECIFICATION

(11) **EP 3 364 806 B1**
(45) Date of publication and mention of the grant of the patent: **05.01.2022**
(21) Application number: 15906845.1
(22) Date of filing: 22.10.2015
(51) Int. Cl.: A43B 13/04, A43B 13/14, A43B 13/40, A43B 1/08

(54) **AN INSOLE AND METHOD FOR MANUFACTURING AN INSOLE**
INNENSOHLE UND VERFAHREN ZUR HERSTELLUNG EINER INNENSOHLE
SEMELLE INTÉRIEURE UN PROCÉDÉ DE FABRICATION D'UNE SEMELLE INTÉRIEURE

(43) Date of publication of application: 29.08.2018
(73) Proprietor: Guadalajara, Jason, Covina, CA 91722 (US)
(72) Inventor: Guadalajara, Jason, Covina, CA 91722 (US)
(74) Representative: Latscha Schöllhorn Partner AG
(86) International application number: PCT/US2015/056979
(87) International publication number: WO 2017/069767

(56) References cited:
- WO-A1-2007/049838
- DE-C- 511 663
- DE-C- 511 663
- US-A- 4 385 024
- US-A- 4 603 024
- US-A- 4 888 225
- US-A- 5 056 162
- US-A- 5 056 162
- US-A- 5 056 162
- US-A- 5 733 647
- US-A- 5 733 647
- US-A1- 2006 016 103
- US-A1- 2012 204 320
- US-B1- 6 280 815

## Description

### FIELD OF THE INVENTION

One or more embodiments of the invention generally relate to insoles or inserts for shoes. More particularly, the invention relates to custom made insoles or inserts for shoes and a method of making them.

### BACKGROUND OF THE INVENTION

The following background information may present examples of specific aspects of the prior art (e.g., without limitation, approaches, facts, or common wisdom) that, while expected to be helpful to further educate the reader as to additional aspects of the prior art, is not to be construed as limiting the present invention, or any embodiments thereof, to anything stated or implied therein or inferred thereupon.

The following is an example of a specific aspect in the prior art that, while expected to be helpful to further educate the reader as to additional aspects of the prior art, is not to be construed as limiting the present invention, or any embodiments thereof, to anything stated or implied therein or inferred thereupon. Some conventional approaches attempt to custom form an insole inside a shoe, by using an expandable uncured resin such as a moisture cured polyurethane foam. While it is effective for making a custom mold, the custom mold could only be cured once.

By way of educational background, another aspect of the prior art generally use expandable uncured resins which need a catalyst to activate. The most common catalyst is moisture. Generally, practitioners are concerned about the risk of moisture easily invading the insole and activate the uncured resin during production or on the way to consumer. Most of the expandable resins are very sensitive and also have a short shelf life of three to twelve months. Therefore, it is unrealistic to bring this product to market and global distribution as it can take many months for production, logistics and finally shipping to retail stores or distributors and many more months until a customer purchases it. By the time the end customer attempts to mold the product, it is very like moisture has already set off the reaction. The expandable uncured resins also cannot be remolded if a customer makes a mistake. Expandable resins also contain Methyl di-p-phenylene isocyanate (MDI) which is known to cause severe allergic reactions to some people and are considered highly toxic and should not be given to consumers in uncured form.

A problem in the prior art method of making custom insoles is that it was only a one time cure after reacting with the curing agent. Once the insole is cured for the first time, it would not be able to be refitted or reshaped. The inability to remold the insoles when using a new pair of shoes or boots makes it uncomfortable in many situations and unusable in some shoes. If any mistakes are made during the curing process, the insoles are ruined.

Another problem in the prior art method of making custom insoles is that the curing agent would also spill out of the insole when injected or introduced, making the soles and shoes wet during the molding process and potentially exposing the skin to the curing agent and resin.

Some of the prior art custom insoles are heat moldable insoles being hollow under the arch, and they are easy to collapse with body weight, and thus not be able to support the feet as orthotics. Some of the prior art custom insoles use heat cured resin mixed with cork. When heated, the cork could be slightly molded. Generally, practitioners are concerned about the risk of the cork not expanding as resin, and thus it will not fit most people's arch height. USS'733647A discloses a removable insole comprising a layer of thermoplastic material shaped to fit as an insole in a shoe and capable of being heat-softened and conformed to the underside of at least a portion of a person's foot.

In view of the foregoing, it is clear that these traditional techniques are not perfect and leave room for more optimal approaches.

### BRIEF DESCRIPTION OF THE DRAWINGS

The present invention is illustrated by way of example, and not by way of limitation, in the figures of the accompanying drawings and in which like reference numerals refer to similar elements and in which:
Figs. 1A-D illustrate an exemplary method of recurable resin forming custom insoles in accordance with an embodiment of the present invention;
Figs. 2A-C illustrate an exemplary method of customizing an insole in accordance with an embodiment of the present invention; and
Fig. 3 illustrates a flow chart of an exemplary method of customizing an insole in accordance with an embodiment of the present invention.

### DETAILED DESCRIPTION OF SOME EMBODIMENTS

The invention relates to a method for manufacturing an insole as specified in appended independent claim 1 and to an insole as specified in appended independent claim 8. Preferred embodiments of the invention are disclosed in the dependent claims. The present invention is best understood by reference to the detailed figures and description set forth herein.

Also, singular words should be read as plural and vice versa and masculine as feminine and vice versa, where appropriate, and alternative embodiments do not necessarily imply that the two are mutually exclusive.

It must be noted that as used herein and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Similarly, for another example, a reference to "a step" or "a means" is a reference to one or more steps or means and may include sub-steps and subservient means. The word "or" should be understood as having the definition of a logical "or" rather than that of a logical "exclusive or" unless the context clearly necessitates otherwise. Preferred methods, techniques, devices, and materials are described, although any methods, techniques, devices, or materials similar or equivalent to those described herein may be used in the practice or testing of the present invention. Structures described herein are to be understood also to refer to functional equivalents of such structures. The present invention will now be described in detail with reference to embodiments thereof as illustrated in the accompanying drawings.

From reading the present disclosure, other variations and modifications will be apparent to persons skilled in the art. Such variations and modifications may involve equivalent and other features which are already known in the art, and which may be used instead of or in addition to features already described herein.

Headings provided herein are for convenience and are not to be taken as limiting the disclosure in any way.

The enumerated listing of items does not imply that any or all of the items are mutually exclusive, unless expressly specified otherwise.

The terms "a", "an" and "the" mean "one or more", unless expressly specified otherwise.

Devices or system modules that are in at least general communication with each other need not be in continuous communication with each other, unless expressly specified otherwise. In addition, devices or system modules that are in at least general communication with each other may communicate directly or indirectly through one or more intermediaries.

A description of an embodiment with several components in communication with each other does not imply that all such components are required. On the contrary a variety of optional components are described to illustrate the wide variety of possible embodiments of the present invention.

It is to be understood that any exact measurements/dimensions or particular construction materials indicated herein are solely provided as examples of suitable configurations and are not intended to be limiting in any way. Depending on the needs of the particular application, those skilled in the art will readily recognize, in light of the following teachings, a multiplicity of suitable alternative implementation details.

The present embodiment uses a stable heat activated resin which is recurable by heat. Instead of expanding to cure in a specific shape, the resin locks a foam into a specific shape until the resin is reactivated at which point it will release the hold on the foam which can return to its original shape to be molded again. The resin becomes hard in its dormant state which provides firm and stable custom support that foam alone cannot achieve.

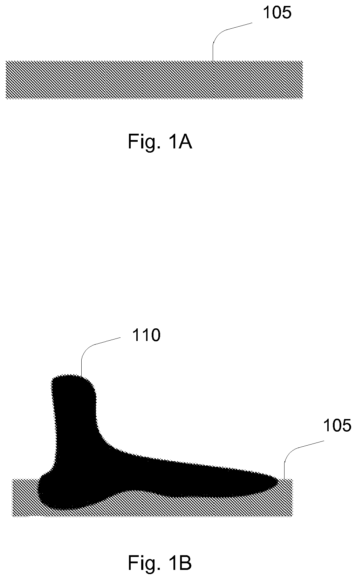

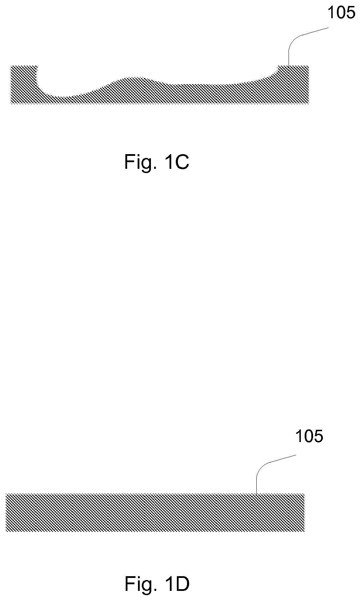

Figs. 1A-D illustrates an exemplary method of a recurable resin forming custom insoles in accordance with an embodiment of the present invention. An example of a foam impregnated with the recurable resin 105 is illustrated by way of example in Fig. 1A. While the foam is in the soft state, the resin is activated, and a pressure is applied by an object, such as a foot 110 to mold the shape, by way of example in Fig. IB. While the foam is in the hard state, the object to be molded, such as the foot 110, is removed when resin cures, leaving the firm custom mold 105, by way of example in Fig. 1C. If remolded is needed, reheat the resin and foam to a curing point, the impregnated foam 105 will rise again to the original shape due to the nature of open cell foam and can be recured and remolded for any foot again, by way of example in Fig. ID. In many embodiments, the impregnated foam may be heated to the curing point with various typed of heating devices such as, but not limited to, an oven, toaster oven, etc. In some embodiments, different resins may be designed to activate at different temperatures.

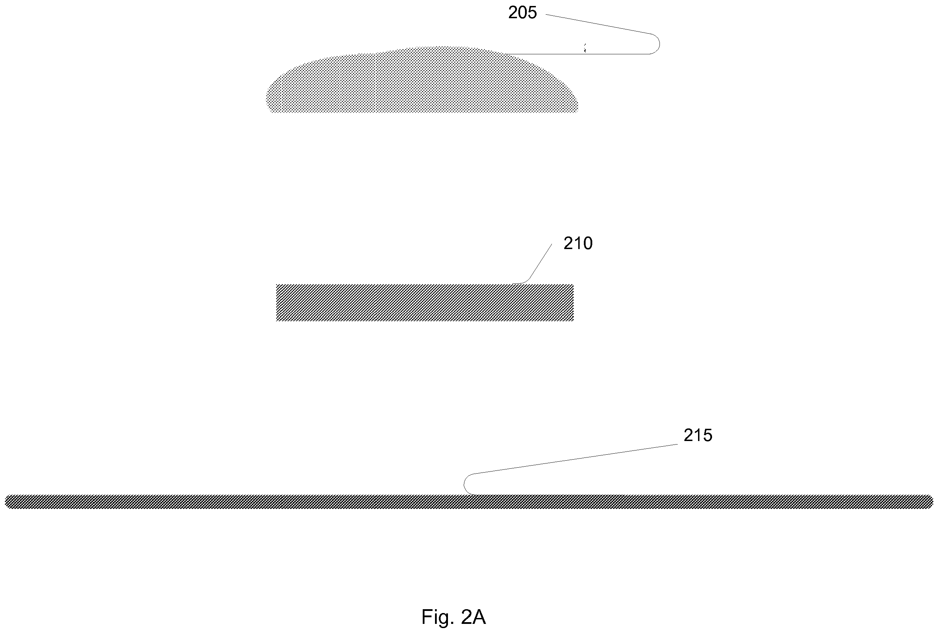

Figs. 2A-C illustrates an exemplary method of customizing an insole in accordance with an embodiment of the present invention. Fig. 2A illustrates elements needed to customize an insole, including a heat resistant bag 205, an arch foam impregnated with heat curable resin 210, and a top layer 215. The heat resistant bag 205 can be a temperature resistant bag, such as, but not limited to, an aluminum vacuum sealed bag and a temperature resistant plastic bag, to act as a chamber if using a heat curable resin. The arch foam impregnated with heat curable resin 210 is formed by activating the recurable resin and saturating the open cell foam with it so the cells of the foam become filled with the resin. In alternate embodiments, a closed cell foam such as, but not limited to, Ethylene Vinyl Acetate (EVA) may be used without a bag. The top layer 215 can be a performance foam or any other cushion, such as, but not limited to, EVA, open cell polyurethane foam, closed cell poly urethane foam, leather or lamb skin, poly ethylene, or other types of foam suitable for insoles. Those skilled in the art, in light of the teachings of the present invention, will readily recognize a multiplicity of alternative and suitable means for the temperature resistant bag and top layer.

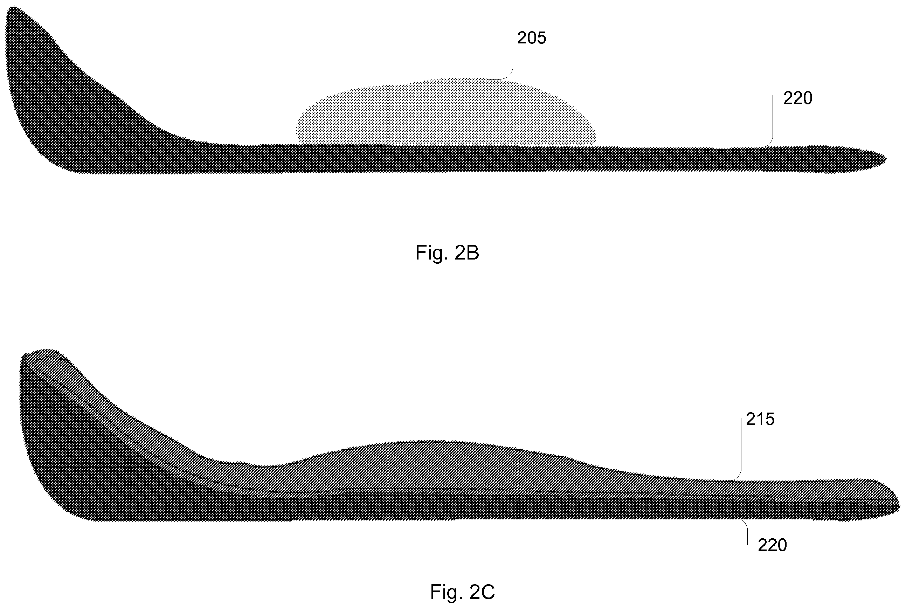

By way of an example in Fig. 2B, in order to avoid a mess or leakage of the resin during recurring, place the impregnated foam 210 in a heat resistant bag 205 and vacuum seal it, and then place it in a desired area of an insole of a bottom layer 220. After placing the top layer 215 on top of the bottom layer 220 and sealed foam 210, seal the insole, by way of example in Fig. 2C. At this stage, the insole with arch pad placed inside is ready to mold. In another embodiment, the heat resistant bag 205 is not used, and the impregnated foam 210 is encased in a closed cell foam instead of an open cell foam as mentioned above. In many practical applications, the bag does not have to be elastic, often it needs to just be loose enough to fit the full foam insert at its full height. In many case, the amount of foam applied will usually determine the max height of the arch and may, thus, be varied depending on factors such as, without limitation size of insole being made, or women's vs mens shoes. The exact value may be determined by an engineer in light of the teaching of the present invention, yet on average 7-8 mm high is suitable in many common applications. Then it may be molded to any suitable height and/or shape within practical limits. In some embodiments, an injection molded insole with closed cell or unbreathable skin may be used where resin may be injected into a chamber which is then permanently sealed. In some embodiments, a closed cell material constructed insole with an arch chamber may be used where resin may be injected or sealed into the sealed arch chamber.

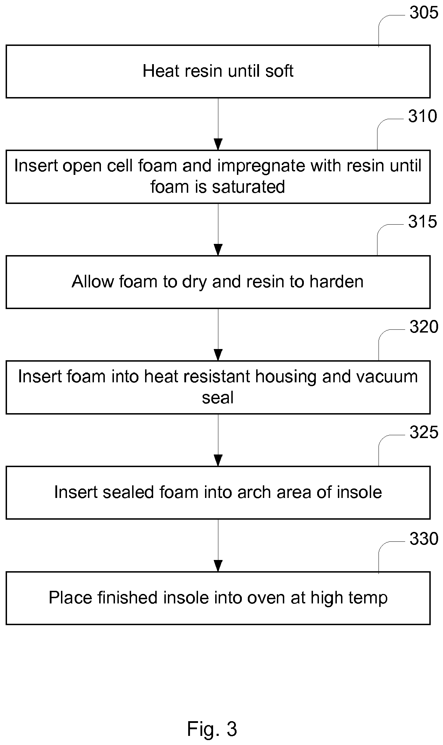

Fig. 3 illustrates a flow chart of an exemplary method of customizing an insole in accordance with an embodiment of the present invention. In a step 305, the resin is heated until sufficiently soft. After the resin becomes soft enough, at a Step 310, the open cell foam 210 is inserted and impregnated with the resin until the foam 210 is sufficiently saturated. After the foam 210 is sufficiently saturated with resin, at Step 315 allow time for the foam 210 to dry and the resin to harden. After the foam 210 is sufficiently dry as to no longer be in a liquid form and the resin is sufficiently hardened to no longer easily change shape by a weight of a body, the foam 210, saturated with resin, is inserted into a heat resistant housing and vacuum sealed. After the foam 210 is inserted and sealed in the heat resistant housing, at Step 325 the sealed foam 210 is inserted into the arch area of the insole. After the sealed foam inserted into the insole, at Step 330, the finished insole is placed into an oven at high temperature, by way of example, not limitation, about 76.7°C (170°F) for 5-8 minutes or until arch is soft enough to be reshaped or deformed by the weight of the body. If the resin becomes hard before molding, heat the curable resins and warm the insole to the proper temperature until the impregnated arch foam becomes soft, in some way that it is optional. By way of an example, and not limitation, in order to warm the insole, place the insole into oven at high temperature, such as 76.7°C (170°F) for 5-8 minutes or until arch is soft. In the present nonlimiting example, an air heater/blow dryer or conduction heating, if using a metal bag, may be used to warm the insole. When the resin and foam are both soft, the insole can be molded to any shape. To mold the insole to individually fit a user, place a foot on the insole and hold the shape in place with body weight or pressure. By way of an example, and not limitation, when the resin and form are both soft, the user places the insoles in a pair of shoes, the shape of the insole can be molded by the user wearing the shoes and walking for five minutes, in order to obtain a dynamic arch shape, in some way, that it is optional. By way of an example, and not limitation, when the resin and form are both soft, the user places the insole on the floor and stands on the insole for several minutes, in order to obtain a moderate arch shape, in some way, that it is optional. By way of an example, and not limitation, when the resin and form are both soft, the user sits down on a chair and puts pressure on insoles with user's feet, in order to obtain a more supportive arch shape, in some way, that it is optional. As it cools in temperature, the insole will recure and become hard again, maintaining the custom shape until the resin is reheated to its curing point again. Those skilled in the art, in light of the teachings of the present invention, will readily recognize a multiplicity of alternative and suitable means to heat and mold the insole. In many practical applications of the present embodiment, to fit multiple sizes, the finished insole may be trimmed to fit shoe, so long as the puncturing the chamber is avoided. For example, without limitation, if fitting to the arch only, it can be used over many sizes, yet if needed to mold to the entire foot, it would typically be made to each particular size.

An aspect of the present invention is to provide a method to custom mold the insoles so that the user can have a perfect custom fitting shoe in length, width and height even though every person has different shapes of feet. The resulting arch support is very firm in the same way as a custom orthotic from a lab without the expensive cost and time consuming process of having a custom orthotics made professionally. The insole is recustomizable and will expand again to full height once reheated.

Some alternative embodiments or the present invention may provide for custom molded shoe inserts for supporting a narrow foot in a wider shoe and/or supporting a shorter length foot in a longer shoe. In some alternate embodiment of the present invention, custom molded insets may provide for head support such as. But not limited to, in helmets, caps, masks, etc. In some other alternative embodiments, custom molded hand grips may be fitted to the user for gripping for example, but not limited to, tools, handle bars, steering wheels, computer pointing devices, etc. In some other embodiments, custom molded inserts may be fitted to the user for body protection devices for example, but not limited to, knee pads, elbow pads, etc. In some other embodiments, custom molded inserts may be fitted to the user for prosthetic devices. In some other embodiments, custom molded inserts may be fitted to the user for denture devices.

Those skilled in the art will readily recognize, in light of and in accordance with the teachings of the present invention, that any of the foregoing steps may be suitably replaced, reordered, removed and additional steps may be inserted depending upon the needs of the particular application. Moreover, the prescribed method steps of the foregoing embodiments may be implemented using any physical and/or hardware system that those skilled in the art will readily know is suitable in light of the foregoing teachings. For any method steps described in the present application that can be carried out on a computing machine, a typical computer system can, when appropriately configured or designed, serve as a computer system in which those aspects of the invention may be embodied.

All the features disclosed in this specification, including any accompanying abstract and drawings, may be replaced by alternative features serving the same, equivalent or similar purpose, unless expressly stated otherwise. Thus, unless expressly stated otherwise, each feature disclosed is one example only of a generic series of equivalent or similar features. Also, singular words should be read as plural and vice versa and masculine as feminine and vice versa, where appropriate, and alternative embodiments do not necessarily imply that the two are mutually exclusive.

## Claims

1. A method for manufacturing an insole comprising the steps of:
activating a recurable resin by applying a heat source;
impregnating a foam material (210) with said activated recurable resin;
drying said impregnated foam material (210) to harden said recurable resin;
inserting said dried impregnated foam material (210) into a chamber; said chamber comprising a heat resistant material and a shape configured for application to a user's body part,
placing said chamber enclosing said foam material (210) in an arch area of a bottom layer (220) of an insole;
wherein a subsequent application of a subsequent heat source to at least said chamber and an application of said chamber to the user's body part molds said impregnated foam material (210) to the user's body part.

2. The method as recited in claim 1, further comprising the step of placing a top layer (215) on said chamber and said bottom layer (220) to seal said insole, preferably said top layer (215) comprises an insole foam material (210).

3. The method as recited in claim 1, in which said chamber comprises a temperature resistant bag (205).

4. The method as recited in claim 3, in which said temperature resistant bag (205) is a vacuum sealed aluminum bag.

5. The method as recited in claim 4, wherein a top layer (215) comprising an insole foam material (210) is placed on said vacuum sealed aluminum bag and said bottom layer (220) to seal said insole, wherein a subsequent heat source is applied to said sealed insole and said heated sealed insole is placed into a shoe with the user inserting a foot into the shoe with a body weight of the user being applied, molds said impregnated foam material (210) to the user's foot; the user remolds said impregnated foam material (210) by reheating said insole.

6. The method as recited in claim 5, in which the user walks during the molding process.

7. The method as recited in claim 1, in which said foam material comprises an open cell structure.

8. An insole comprising:
a foam material (210) impregnated with an activated recurable resin, said recurable resin being activated by a heat source;
a chamber enclosing said foam material (210) with said foam material (210) being dried to harden said recurable resin, said chamber comprising a heat resistant material and a shape configured for application to a user's body part,
a bottom layer (220), wherein said chamber enclosing said foam material (210) is placed in an arch area of said bottom layer (220);
wherein a subsequent application of a subsequent heat source to at least said chamber and an application of said chamber to the user's body part molds said impregnated foam material (210) to the user's body part.

9. The insole as recited in claim 8, further comprising a top layer (215) being configured for sealing said chamber inside said insole.

10. The insole as recited in claim 8, in which said chamber comprises a temperature resistant bag (205).

11. The insole as recited in claim 10, in which said temperature resistant bag (205) comprises an aluminum vacuum sealed bag.

12. The insole as recited in claim 9, in which said top layer (215) comprises an insole foam material (210).

13. The insole as recited in claim 8, in which said foam material (210) comprises an open cell structure.

## Patentansprüche

1. Verfahren zum Herstellen einer Einlage, das die folgenden Schritte umfasst:
Aktivieren eines wiederhärtbaren Harzes durch Aufbringen einer Wärmequelle;
Imprägnieren eines Schaumstoffmaterials (210) mit dem aktivierten wiederhärtbaren Harz;
Trocknen des imprägnierten Schaumstoffmaterials (210), um das wiederhärtbare Harz hart werden zu lassen;
Einführen des getrockneten imprägnierten Schaumstoffmaterials (210) in eine Kammer; wobei die Kammer ein wärmebeständiges Material und eine Form umfasst, die für das Aufbringen auf einen Körperteil eines Benutzers konfiguriert ist,
Platzieren der Kammer, die das Schaumstoffmaterial (210) umschließt, in einen Bogenbereich einer unteren Schicht (220) einer Einlage;
wobei ein anschließendes Aufbringen einer anschließenden Wärmequelle auf wenigstens die Kammer und das Aufbringen der Kammer auf den Körperteil des Benutzers das imprägnierte Schaumstoffmaterial (210) an den Körperteil des Benutzers anformt.

2. Verfahren nach Anspruch 1, das ferner den Schritt des Platzierens einer oberen Schicht (215) auf der Kammer und der unteren Schicht (220) umfasst, um die Einlage zu versiegeln, vorzugsweise wobei die obere Schicht (215) ein Einlagenschaumstoffmaterial (210) umfasst.

3. Verfahren nach Anspruch 1, wobei die Kammer einen temperaturbeständigen Beutel (205) umfasst.

4. Verfahren nach Anspruch 3, wobei der temperaturbeständige Beutel (205) ein vakuumversiegelter Aluminiumbeutel ist.

5. Verfahren nach Anspruch 4, wobei eine obere Schicht (215), die ein Einlagenschaumstoffmaterial (210) umfasst, auf den vakuumversiegelten Aluminiumbeutel und die untere Schicht (220) platziert wird, um die Einlage zu versiegeln, wobei eine anschließende Wärmequelle auf die versiegelte Einlage aufgebracht wird und die erwärmte versiegelte Einlage in einen Schuh platziert wird, wobei dadurch, dass der Benutzer einen Fuß in den Schuh einführt, wobei ein Körpergewicht des Benutzers aufgebracht wird, das imprägnierte Schaumstoffmaterial (210) an den Fuß des Benutzers angeformt wird; wobei der Benutzer das imprägnierte Schaumstoffmaterial (210) durch Wiedererwärmen der Einlage neu anformt.

6. Verfahren nach Anspruch 5, wobei der Benutzer während des Anformvorgangs läuft.

7. Verfahren nach Anspruch 1, wobei das Schaumstoffmaterial eine offene Zellstruktur umfasst.

8. Einlage, die Folgendes umfasst:
ein Schaumstoffmaterial (210), das mit einem aktivierten wiederhärtbaren Harz imprägniert ist, wobei das wiederhärtbare Harz durch eine Wärmequelle aktiviert wird;
eine Kammer, die das Schaumstoffmaterial (210) umschließt, wobei das Schaumstoffmaterial (210) getrocknet wird, um das wiederhärtbare Harz hart werden zu lassen, wobei die Kammer ein wärmebeständiges Material und eine Form umfasst, die für das Aufbringen auf einen Körperteil eines Benutzers konfiguriert ist,
eine untere Schicht (220), wobei die Kammer, die das Schaumstoffmaterial (210) umschließt, in einen Bogenbereich der unteren Schicht (220) platziert wird;
wobei ein anschließendes Aufbringen einer anschließenden Wärmequelle auf wenigstens die Kammer und ein Aufbringen der Kammer auf den Körperteil des Benutzers das imprägnierte Schaumstoffmaterial (210) an den Körperteil des Benutzers anformt.

9. Einlage nach Anspruch 8, die ferner eine obere Schicht (215) umfasst, die zum Versiegeln der Kammer innerhalb der Einlage konfiguriert ist.

10. Einlage nach Anspruch 8, wobei die Kammer einen temperaturbeständigen Beutel (205) umfasst.

11. Einlage nach Anspruch 10, wobei der temperaturbeständige Beutel (205) einen vakuumversiegelten Aluminiumbeutel umfasst.

12. Einlage nach Anspruch 9, wobei die obere Schicht (215) ein Einlagenschaumstoffmaterial (210) umfasst.

13. Einlage nach Anspruch 8, wobei das Schaumstoffmaterial (210) eine offene Zellstruktur umfasst.

## Revendications

1. Procédé de fabrication d'une semelle intérieure comprenant les étapes suivantes :
l'activation d'une résine redurcissable par application d'une source de chaleur ;
l'imprégnation d'un matériau en mousse (210) avec ladite résine redurcissable activée ;
le séchage dudit matériau en mousse imprégné (210) destiné à durcir ladite résine redurcissable ;
l'insertion dudit matériau en mousse imprégné séché (210) dans une chambre ; ladite chambre comprenant un matériau résistant à la chaleur et une forme conçue pour être appliquée sur une partie du corps d'un utilisateur,
le placement de ladite chambre renfermant ledit matériau en mousse (210) dans une zone de voûte d'une couche inférieure (220) d'une semelle intérieure ;
une application ultérieure d'une source de chaleur ultérieure sur au moins ladite chambre et une application de ladite chambre sur la partie du corps de l'utilisateur moulant ledit matériau en mousse imprégné (210) sur la partie du corps de l'utilisateur.

2. Procédé selon la revendication 1, comprenant en outre l'étape de placement d'une couche supérieure (215) sur ladite chambre et ladite couche inférieure (220) pour sceller ladite semelle intérieure, de préférence ladite couche supérieure (215) comprenant un matériau en mousse (210) de semelle intérieure.

3. Procédé selon la revendication 1, dans lequel ladite chambre comprend un sac résistant à la température (205).

4. Procédé selon la revendication 3, dans lequel ledit sac résistant à la température (205) est un sac en aluminium scellé sous vide.

5. Procédé selon la revendication 4, dans lequel une couche supérieure (215) comprenant un matériau en mousse de semelle intérieure (210) est placée sur ledit sac en aluminium scellé sous vide et ladite couche inférieure (220) destinée à sceller ladite semelle intérieure, une source de chaleur ultérieure étant appliquée sur ladite semelle intérieure scellée et ladite semelle intérieure scellée chauffée étant placée dans une chaussure, l'utilisateur insérant un pied dans la chaussure en appliquant un poids corporel de l'utilisateur, moulant ledit matériau en mousse imprégné (210) au pied de l'utilisateur ; l'utilisateur remoulant ledit matériau en mousse imprégné (210) en chauffant à nouveau ladite semelle intérieure.

6. Procédé selon la revendication 5, dans lequel l'utilisateur marche pendant le processus de moulage.

7. Procédé selon la revendication 1, dans lequel ledit matériau en mousse comprend une structure à cellules ouvertes.

8. Semelle intérieure comprenant :
un matériau en mousse (210) imprégné d'une résine redurcissable activée, ladite résine redurcissable étant activée par une source de chaleur ;
une chambre renfermant ledit matériau en mousse (210), ledit matériau en mousse (210) étant séché pour durcir ladite résine redurcissable, ladite chambre comprenant un matériau résistant à la chaleur et une forme conçue pour une application sur une partie du corps d'un utilisateur,
une couche inférieure (220), ladite chambre renfermant ledit matériau en mousse (210) étant placée dans une zone de voûte de ladite couche inférieure (220) ;
une application ultérieure d'une source de chaleur ultérieure sur au moins ladite chambre et une application de ladite chambre sur la partie du corps de l'utilisateur moulant ledit matériau en mousse imprégné (210) sur la partie du corps de l'utilisateur.

9. Semelle intérieure selon la revendication 8, comprenant en outre une couche supérieure (215) étant conçue pour sceller ladite chambre à l'intérieur de ladite semelle intérieure.

10. Semelle intérieure selon la revendication 8, dans laquelle ladite chambre comprend un sac résistant à la température (205).

11. Semelle intérieure selon la revendication 10, dans laquelle ledit sac résistant à la température (205) comprend un sac en aluminium scellé sous vide.

12. Semelle intérieure selon la revendication 9, dans laquelle ladite couche supérieure (215) comprend un matériau en mousse (210) de semelle intérieure.

13. Semelle intérieure selon la revendication 8, dans laquelle ledit matériau en mousse (210) comprend une structure à cellules ouvertes.
